# DEMANDE DE BREVET EUROPEEN

(11) **EP 1 792 700 A1**
(43) Date de publication de la demande: **06.06.2007**
(21) Numéro de dépôt: 06301212.4
(22) Date de dépôt: 04.12.2006
(51) Int. Cl.: B29C 44/14

(54) **Produit en matière plastique expansée et son procédé de fabrication**

(30) Priorité: 05.12.2005 FR 0553711
(71) Demandeur: KNAUF SAS, 68600 Wolfgantzen (FR)
(72) Inventeur: LAUNAY, Jacques, 68180, HORBOURG-WIHR (FR); ACKERMANN, Yves, 68150, OSTHEIM (FR)
(74) Mandataire: Herrburger, Pierre

(57) **Abrégé**

Produit en matière plastique expansée (1) comportant un habillage (2) sur une partie de sa surface, telle qu'un meuble, un élément de meuble, un siège.

La surface (12) couverte par la pièce d'habillage (2) est bordée par une gorge (13) dans laquelle est encastré le bord (21) de la pièce de matière d'habillage (2).

## Description

### Domaine de l'invention

La présente invention concerne un produit en matière plastique expansée comportant un habillage sur une partie de sa surface, telle qu'un meuble, un élément de meuble, un siège et notamment un siège réhausseur pour enfant.

### Etat de la technique

Les produits tels que l'assise d'un siège, son dossier et, plus généralement, certains meubles sont munis de revêtements tels que des housses et des habillages. Ces revêtements ont pour but d'améliorer l'esthétique du produit par la diversité des couleurs et des matières ou le confort.

Il existe également des objets plus particuliers, munis d'habillage tels que des coques pour le transport des enfants dans les voitures ou des sièges réhausseurs utilisés dans les voitures pour permettre d'attacher un enfant au siège à l'aide de la ceinture de sécurité.

Les réhausseurs connus sont réalisés en matière plastique moulée sous la forme d'une coque, le cas échéant munie d'une housse en tissu. Ces réhausseurs connus sont relativement inconfortables tant à cause de leur rigidité que de l'habillage. De plus, l'habillage c'est-à-dire la housse peut glisser par rapport à la coque de sorte que l'enfant risque lui-même de glisser sous l'effet d'une décélération brutale ou d'un coup de frein.

### But de l'invention

La présente invention a pour but de développer un produit en matière plastique expansée comportant un habillage tel qu'un élément de mobilier Ou d'ameublement comme un siège, une banquette, une chaise ou encore un siège réhausseur de fabrication simple, permettant d'améliorer la sécurité et le confort, qui soit plus résistant et permette une adaptation esthétique plus facile.

### Exposé et avantage de l'invention

A cet effet, l'invention concerne un produit du type défini ci-dessus caractérisé en ce que la surface couverte par l'habillage est bordée par une gorge dans laquelle est encastré le bord de la pièce de matière d'habillage.

Ce produit en matière plastique expansée présente l'avantage d'avoir une surface d'habillage couverte de manière précise par la pièce d'habillage dont les bords, encastrés dans le corps du produit, sont bien tenus par cet encastrement et offrent un contour parfaitement net sans nécessiter une préparation précise de la pièce d'habillage. La surface d'habillage peut couvrir la surface supérieure du produit, partiellement ou totalement. Elle peut également ne couvrir qu'une partie de cette surface et venir sur une partie du bord jusque sous le dessous du produit, la gorge d'encastrement du bord de la pièce d'habillage suivant le contour de la surface d'habillage.

Dans le cas d'un produit en forme d'assise ou de dossier, cela permet d'habiller non seulement la surface principale mais de passer également sur le bord et revenir par exemple au dos du dossier ou sous le siège, pour que l'arrête de l'assise ou du dossier soit également habillée, selon les fonctionnalités ou l'esthétique à réaliser. En particulier si la surface habillée a une forme complexe, l'encastrement du bord de la pièce de matière d'habillage est important pour bien retenir cette pièce d'habillage, évitant qu'elle ne se déforme. Cela est très important en particulier si la pièce d'habillage a un motif géométrique dont l'orientation doit être respectée par exemple des rayures. Le fait que la pièce d'habillage puisse contourner le bord de la surface par exemple de l'assise ou du dossier, améliore le confort donné par le produit. La réalisation d'un tel produit est particulièrement simple ce qui permet également de diversifier la nature des pièces d'habillage.

Suivant une autre caractéristique particulièrement avantageuse, le produit est en forme de siège réhausseur pour enfant, ayant une surface d'assise bordée par des côtés latéraux relevés, en matière plastique expansée, la surface d'assise étant couverte d'une pièce d'habillage, complexée, dont les bords sont encastrés dans l'épaisseur de la matière plastique expansée de l'assise.

Comme pour un siège, la combinaison entre une surface habillée par une pièce d'habillage et une surface non habillée permet de combiner avantageusement les surfaces concernées par le confort donné par le produit et les surfaces plus fonctionnelles ou soumises à une usure plus importante comme par exemple les bords de la pièce qui peuvent ne pas être intégralement couverts par la pièce d'habillage ou ne pas l'être du tout. Cette amélioration du confort se traduit également par un avantage esthétique.

Suivant une autre caractéristique avantageuse, les bords de la pièce d'habillage sont enfoncés dans la gorge bordant la surface d'habillage, notamment la surface d'assise située à l'intérieur des limites du siège. Il peut en être de même du dossier si le produit est un siège avec un dossier. Même si le dossier et l'assise du siège sont moulés en matière plastique expansée en une seule pièce, il est néanmoins possible de garnir séparément l'assise et le dossier par une pièce d'habillage distincte, de manière à obtenir une surface habillée, plus nette pour l'assise et pour le dossier en évitant l'habillage de formes géométriques souvent complexes à la jonction du dossier et de l'assise. En outre, cela permet d'utiliser une matière ayant des caractéristiques physiques ou esthétiques différentes pour l'assise et pour le dossier ce qui est également avantageux pour l'esthétique car cela permet une très grande diversité de couleurs et de motifs.

Suivant une autre caractéristique avantageuse, la surface du siège entourant la surface d'assise revêtue de la pièce de tissu a une structure non lisse, d'un grain de cuir ou d'un motif. Cette combinaison entre la peau de la matière expansée entourant la surface d'habillage et la surface d'habillage elle-même permet d'utiliser les caractéristiques de résistance mécanique de la matière plastique expansée pour les surfaces les plus exposées aux chocs ou à l'usure.

Suivant une autre caractéristique avantageuse, la matière plastique expansée est du polypropylène expansé, du polystyrène expansé ou du polyéthylène expansé.

Il est également possible de modifier les caractéristiques d'expansion du produit et par exemple, d'expanser différemment sous la surface d'habillage et autour de celle-ci, pour avoir par exemple plus de souplesse sous la surface d'habillage et plus de rigidité autour de la surface d'habillage. Ainsi, la matière plastique sous la surface d'habillage formant l'assise est avantageusement expansée à un degré d'expansion différent des autres parties du produit, notamment de l'assise ou du dossier du siège.

Suivant une autre caractéristique avantageuse, la pièce d'habillage est une pièce de tissu. Il peut également s'agir d'une pièce de non tissé ou d'une matière telle que du cuir, similicuir ou produit de ce type.

Comme la pièce d'habillage adhère à la surface de contact avec le corps du produit en matière expansée, la pièce d'habillage ne glisse pas par rapport à la matière expansée et cela d'autant plus que les bords de la pièce d'habillage sont encastrés dans la gorge qui l'entoure.

L'invention concerne également un procédé de fabrication d'un tel produit. Ce procédé est caractérisé en ce qu'
- on réalise un moule muni d'une cloison délimitant jusqu'à une certaine profondeur, la surface d'habillage du produit,
- on place une pièce d'habillage dans le moule, à l'intérieur de la cavité délimitée par la cloison,
- on introduit la matière plastique dans la cavité du moule et on la fait expanser pour intégrer la pièce d'habillage dans la surface d'habillage de la pièce tout en réalisant celle-ci.

L'invention concerne également un procédé caractérisé en ce qu'
- on réalise un moule muni d'une cloison délimitant jusqu'à une certaine profondeur, la surface d'habillage du produit,
- on fait expanser la matière plastique de la pièce dans le moule,
- on ouvre le moule et on place la pièce d'habillage sur la surface d'habillage puis, on referme le moule pour encastrer le bord de la pièce d'habillage dans la gorge du corps du produit moulé pour encastrer le bord de la pièce d'habillage dans la gorge du corps du produit et pour plaquer / appliquer le tissu sur le produit moulé expansé.

En particulier, il est avantageux pour assurer l'accrochage de la pièce d'habillage au corps de la matière plastique expansée formant le produit, que la pièce d'habillage soit revêtue sur sa face arrière, c'est-à-dire celle tournée vers la matière expansée, d'un additif réactivable par la chaleur de manière à adhérer à la matière plastique au moment où celle-ci, chauffée, s'expanse.

Les avantages d'un produit ou de la mise en oeuvre du procédé selon l'invention sont particulièrement importants dans le cas d'un siège tel qu'une coque pour enfant ou un siège réhausseur avec ou sans dossier pour enfant.

En effet, le réhausseur selon l'invention permet, grâce à sa réalisation sous la forme d'une pièce en matière plastique expansée, d'offrir une meilleure sécurité et un meilleur confort : la surface d'assise proprement dite étant revêtue d'un tissu complexé, celui-ci est fixé solidairement à la matière plastique expansée et ne glisse pas par rapport à celle-ci.

Le confort est également amélioré et les bords latéraux relevés, que l'enfant touche naturellement avec ses mains, sont faciles à nettoyer car non revêtus de tissu mais sont constitués par la peau de la matière plastique expansée.

Le siège réhausseur est également d'une fabrication simple et économique car elle se fait en une seule opération de manière automatique sans avoir à tenir compte de la netteté du découpage de la pièce de tissu intégrée au siège. Le bord du tissu n'a pas à être traité d'une manière particulière, car même découpé de façon irrégulière comme cela est pratiquement le cas du fait de la nature de la matière, il est intégré dans l'épaisseur de la matière plastique de l'assise qui, non seulement améliore l'accrochage, mais aussi et surtout cache naturellement le bord de la pièce de tissu et ne laisse apparaître qu'une surface couverte de manière impeccable puisque tendue et bordée par la partie intérieure, moulée. En effet, la pièce de tissu, placée dans le moule, est fermement appliquée contre les parois du moule ce qui donne une forme précise au contour de l'assise, à l'intérieur de la partie revêtue du tissu. Le contour extérieur de cette surface d'assise revêtue de tissu est net car il correspond en fait à la trace de la cloison du moule formant le support qui reçoit la pièce de tissu et délimite la surface d'assise. Cette gorge évite que la matière plastique à l'extérieur de la surface d'assise n'imprègne le bord du tissu ou ne migre dans celui-ci d'une manière incontrôlable.

Enfin, cette technique de fabrication du siège réhausseur permet une très grande diversité de coloris ou de matières sans que cela ne modifie ou ni complique la fabrication ou l'outillage servant à la fabrication.

De façon avantageuse, les bords de la pièce de tissu sont enfoncés dans la gorge périphérique bordant la surface d'assise et qui est la trace de la cloison intérieure du moule délimitant la surface d'assise. Suivant une autre caractéristique, la surface du siège réhausseur au-delà de la surface d'assise a un grain imitant un cuir ce qui évite la fragilité d'aspect d'une surface lisse et permet une adaptation à l'habillage du véhicule.

### Dessins

La présente invention sera décrite de manière plus détaillée à l'aide de modes de réalisation du produit et du procédé selon l'invention, représentés dans les dessins annexés dans lesquels :
- la figure 1 est une vue en perspective d'un produit de forme générale selon l'invention,
- la figure 2 est une coupe transversale du produit de la figure 1,
- les figures 3A-3D montrent différentes étapes de mise en oeuvre du procédé de l'invention pour la fabrication d'un produit tel que celui des figures 1 et 2,
- les figures 4A-4E montrent une variante de réalisation du procédé selon l'invention,
- la figure 5 est une vue en perspective d'un mode de réalisation d'un produit selon l'invention en forme de siège réhausseur pour enfant,
- la figure 6 est une vue en perspective d'un siège réhausseur coupé selon son plan médian longitudinal,
- les figures 7A-7C montrent respectivement une vue de dessus, une vue de face et une vue de dessous du réhausseur de la figure 1,
- les figures 8A-8D montrent schématiquement quatre étapes du procédé de fabrication du siège réhausseur selon la figure 5.

### Description de modes de réalisation de l'invention

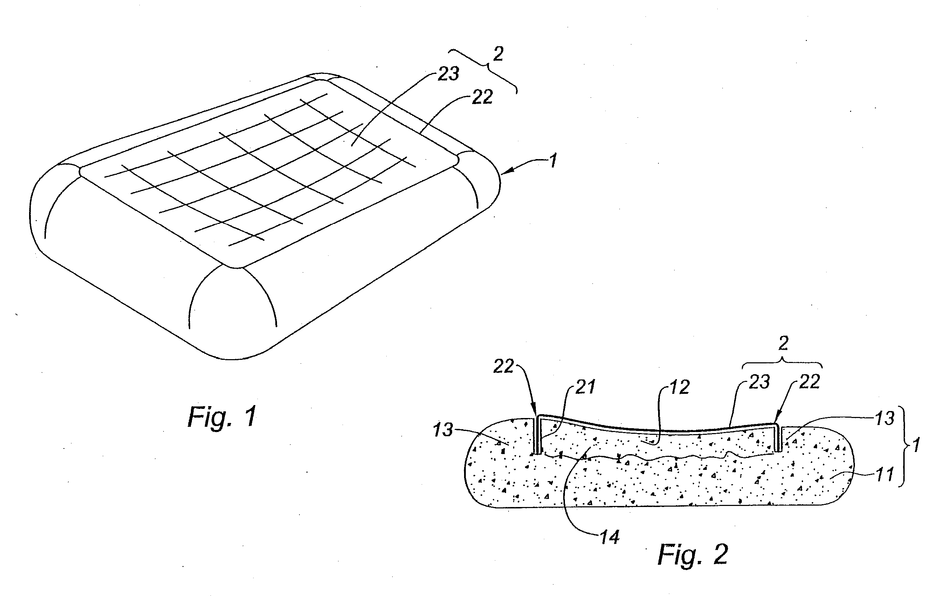

Un produit et un procédé selon l'invention pour la réalisation de ce produit seront décrits de manière générale ci-après à l'aide des figures 1 à 3D.

Selon la figure 1, l'invention concerne un produit en matière plastique expansée comportant un habillage sur une partie de sa surface. Ce produit est, par exemple, un élément de meuble tel qu'une assise de siège, un dossier, une banquette, un accoudoir ou un élément de garniture de véhicule.

Ce produit 1 se compose d'un corps 11 en matière plastique expansée, par exemple en polypropylène, en polystyrène ou en polyéthylène expansés. Une partie de sa surface est garnie d'une pièce d'habillage 2 par exemple en tissu, en non tissé, en cuir ou en une matière de revêtement utilisée pour de telles applications.

La surface 12 couverte par la pièce d'habillage 2 est bordée par une gorge 13 dans laquelle est encastré le bord 21 de la pièce en matière d'habillage.

Cet encastrement dans la gorge 13 réalisée au moment de la fabrication, permet de recevoir le bord 21 de la pièce d'habillage 2 sans que celui-ci ne soit nécessairement préparé de manière très précise et nette par une couture, un ourlet dans le cas d'une pièce en tissu ou autres finitions. Ce bord 21 est recourbé et enfoncé ou intégré dans le corps 11 de la matière plastique expansée et accroché dans celle-ci. Le contour 22 de la surface d'habillage 12 est, dans ces conditions, parfaitement net et précis.

Le corps 11 du produit est expansé en une ou plusieurs fois, par exemple pour créer sous la surface d'habillage une couche 14 dont l'expansion est différente de celle des autres parties du corps. Cette couche n'est pas une zone délimitée de façon précise par une interface mais présente une certaine épaisseur transitoire dans laquelle la densité de la matière varie entre les deux valeurs extrêmes d'expansion.

Cette expansion différentielle peut également se répéter de différentes manières dans diverses zones du corps de la pièce.

Pour des nécessités de dessin, la surface d'habillage 23 apparaît dans la vue en coupe de la figure 2 comme n'étant pas appliquée strictement contre la surface correspondante 12 du corps 11 de matière expansée. En réalité, cette surface d'habillage 23 est étroitement appliquée et solidarisée contre cette surface par l'adhérence de la matière expansée. Cette adhérence peut être favorisée par une enduction d'adhésif de la face arrière de la pièce d'habillage.

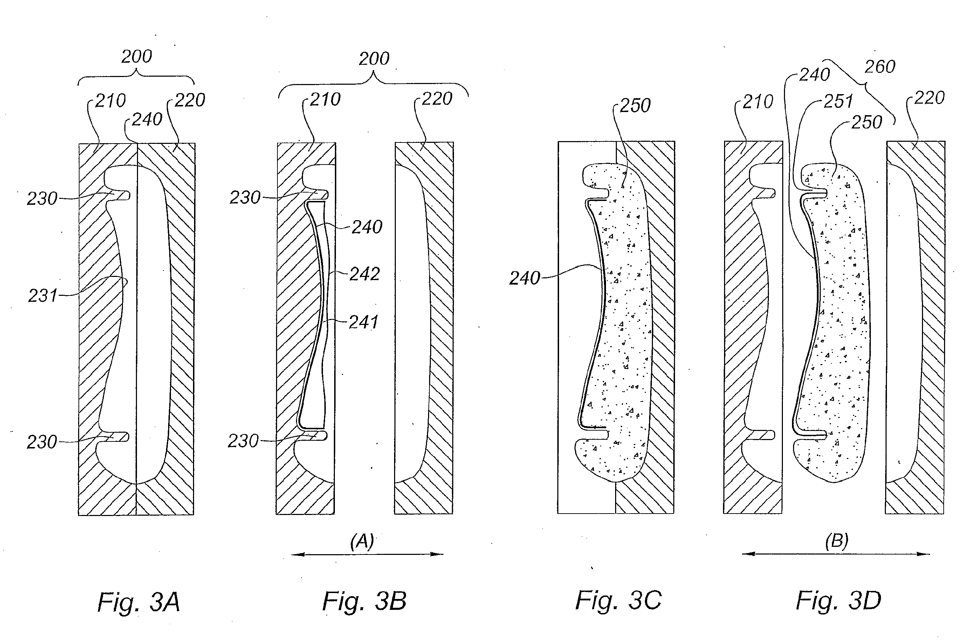

Les figures 3A-3D montrent différentes étapes de fabrication d'un produit en matière plastique expansée muni d'un habillage comme celui des figures 1 et 2 selon le procédé de l'invention.

D'abord, on réalise un moule 200 par exemple en deux parties 210, 220, dont l'une 210 des parties, celle moulant la surface d'habillage de la future pièce comporte une cloison 230 délimitant la surface d'habillage 231 du futur produit. Cette cloison 230 est continue sur le pourtour de la surface d'habillage 231. La cloison 230 pénètre à une certaine profondeur dans le moule. Pour les besoins du dessin, cette cloison a été représentée avec une épaisseur très exagérée. Il s'agit en fait d'une simple lame aussi mince que possible. Cette lame est néanmoins orientée de façon à ne pas créer de zones en contre-dépouille pour permettre le démoulage du produit. Cela signifie schématiquement que cette cloison doit être perpendiculaire au plan d'ouverture 240 du moule.

Selon le procédé de fabrication proprement dit du produit, on ouvre le moule 200 ainsi réalisé (figure 3B) pour placer la pièce d'habillage 240 à l'intérieur du moule, dans le compartiment délimité par la cloison 230. Cette pièce 240 est découpée de manière à couvrir non seulement la surface d'habillage 231 proprement dite dans le moule mais à déborder de celle-ci pour remonter le long de l'intérieur de la cloison 230 sans toutefois, de préférence, déborder par rapport à la cloison. Le contour 242 du bord 241 de cette pièce 240 est irrégulier.

Puis, on ferme le moule 200 et on injecte la matière à expanser 250 (figure 3C).

On fait expanser la matière 250 qui remplit toutes les cavités du moule 200 et se plaque contre la pièce d'habillage 240 elle-même plaquée contre la surface correspondante 231 du moule 200. La matière plastique en expansion 250, s'accroche alors au dos de la pièce d'habillage 240.

Après expansion, on démoule la pièce 260 formée du corps de matière expansée 250 et de la pièce d'habillage 240 (figure 3D).

Pour les raisons déjà indiquées ci-dessus, la gorge 251 laissée comme trace par la cloison 230 délimitant la surface d'habillage a une largeur exagérée. En fait, la cloison étant mince, cette gorge est pratiquement imperceptible et surtout en général, elle est refermée par la matière qui, à la sortie du moule encore chaude, peut encore se déformer et s'accroche aux bords 241 de la pièce 240.

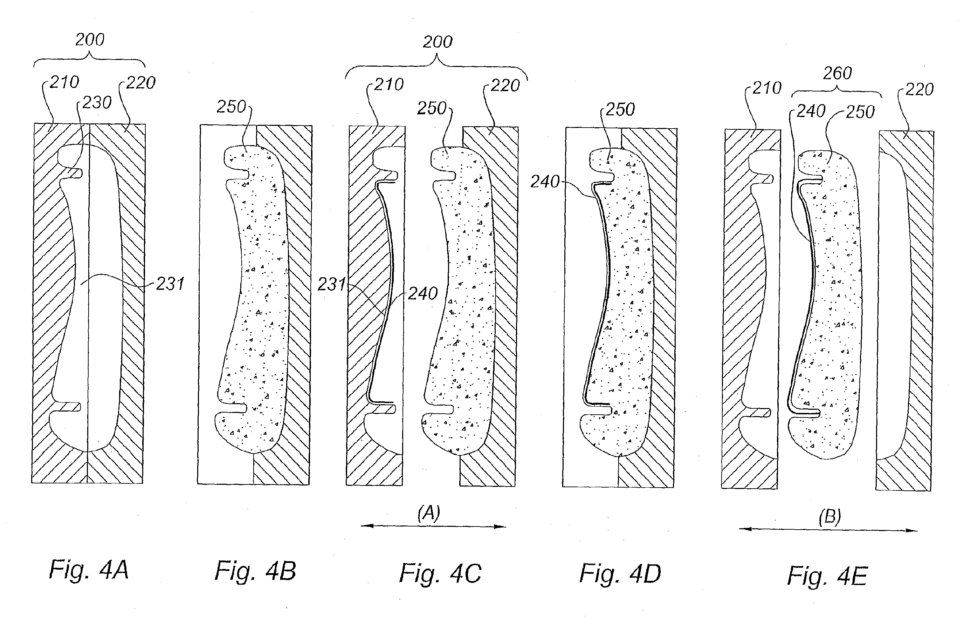

Les figures 4A-4E montrent une variante de réalisation du procédé selon l'invention.

Cette variante de procédé utilise le même moule que celui décrit ci-dessus mais concerne la mise en place de la pièce d'habillage 240. Les mêmes références que celles des figures 3A-3D seront utilisées ici pour désigner les éléments identiques ou analogues.

Partant d'un moule 200 muni d'une cloison 230 délimitant la surface d'habillage 231 (figure 4A), on introduit, dans la cavité du moule, la matière plastique à expanser 250 et on la fait expanser (figure 4B). Après cette expansion, on ouvre (A) le moule 200 (figure 4C) pour placer la pièce d'habillage 240 dans la partie du moule délimitée par la cloison 230 (figure 4C). Puis, on referme le moule (figure 4D) en poursuivant l'expansion de manière à accrocher la pièce d'habillage 240 contre la surface d'habillage du produit 250 (figure 4D). Enfin, on ouvre le moule (B) (figure 4E) pour en extraire le produit 260 muni de son habillage 240.

Dans les deux versions du procédé (figures 3A-3D ou figures 4A-4E), il est avantageux de munir la face arrière de la pièce d'habillage 240, d'une enduction d'adhésif réactivable à chaud. Cette enduction peut être faite directement sur la matière dans laquelle on découpe la pièce d'habillage. Cet adhésif réactivable à chaud sera ainsi réactivé dans le moule pour bien adhérer contre la surface du corps en matière plastique expansée de façon à bien être accroché à cette surface même si celle-ci a une forme concave comme dans l'exemple présenté.

L'invention concerne également de manière particulière un produit tel qu'un siège ou une partie de siège et notamment, un siège réhausseur ou simplement appelé réhausseur utilisé dans une automobile.

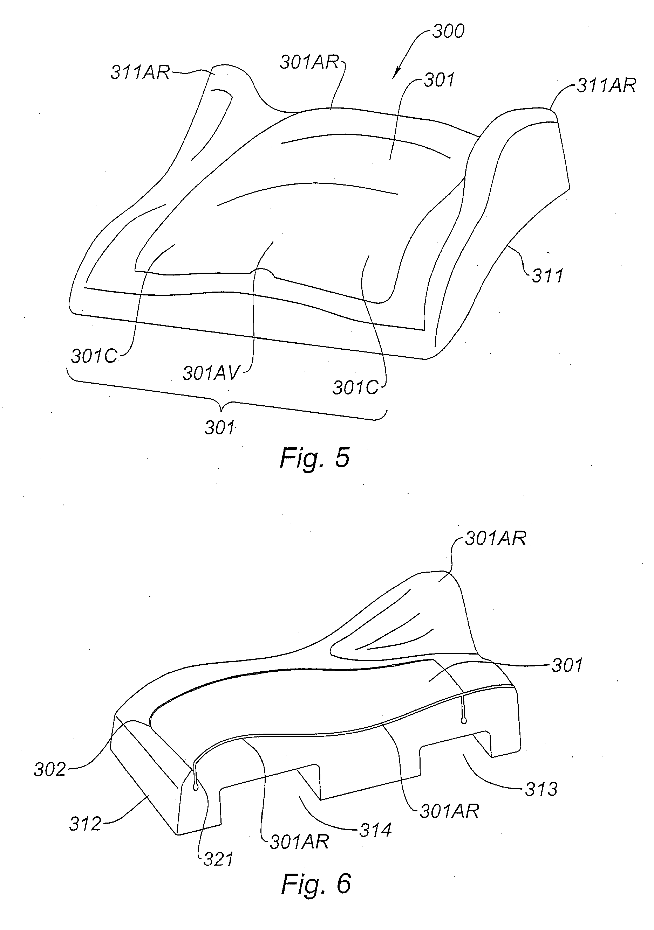

Ainsi, selon la figure 5, l'invention concerne un siège réhausseur 300 pour enfant qui se place sur la banquette ou siège arrière d'un véhicule en étant retenu avec la ceinture de sécurité placée autour de l'enfant. Ce siège a une surface d'assise 301 qui est une surface géométrique non réglée, dont le creux 301AR dans sa partie arrière, se prolonge vers l'avant et au milieu par un léger bossage 301AV et de part et d'autre de celui-ci, un creux 301C pour les cuisses de l'enfant. Les côtés latéraux 311 ont une parie arrière 311AR relevée de sorte que l'ensemble constitue une sorte de fond de siège baquet.

Le siège réhausseur 300 est fabriqué en matière plastique telle que du PPE, du PSE ou du PEE. Sa surface d'assise 301 est revêtue d'une pièce de tissu 302 complexé, c'est-à-dire adhérent à la surface de la matière plastique expansée.

Les bords 331 de la pièce de tissu 302 qui couvre la surface d'assise 301 sont encastrés dans l'épaisseur de la matière plastique expansée de l'assise pour assurer son accrochage et donner à la surface d'assise 1 ainsi couverte, un contour parfaitement net.

Comme cela apparaît à la figure 6, le bord 321 de la pièce de tissu 302 est encastré dans une gorge périphérique 312 qui borde la surface d'assise. Cette mise en place vient de fabrication.

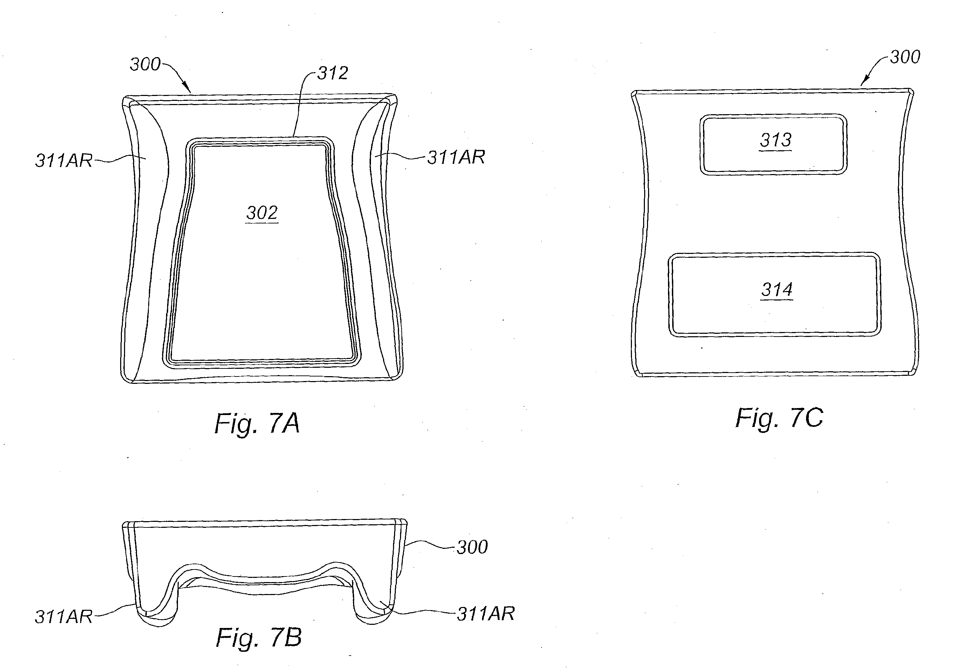

Les figures 7A-7C montrent d'autres vues du réhausseur 300 de la figure 5, laissant apparaître la forme sensiblement trapézoïdale de la surface d'assise couverte par la pièce de tissu 302 et bordée par les côtés relevés 311AR.

Le dessous du réhausseur comporte deux cavités 313, 314 destinées à réduire le volume de matière et alléger le produit sans que cela ne soit au détriment de sa solidité.

Les 8A-8D montrent schématiquement quatre étapes de fabrication d'un réhausseur selon l'invention.

Pour simplifier la description du procédé aux inventions appliquées à la fabrication d'un siège réhausseur, le moule utilisé ne sera représenté que par sa partie inférieure et le moule est représenté à plat en position horizontale.

En réalité, les moules sont généralement disposés verticalement comme cela a été représenté aux figures 3A-3D ou 4A-4E.

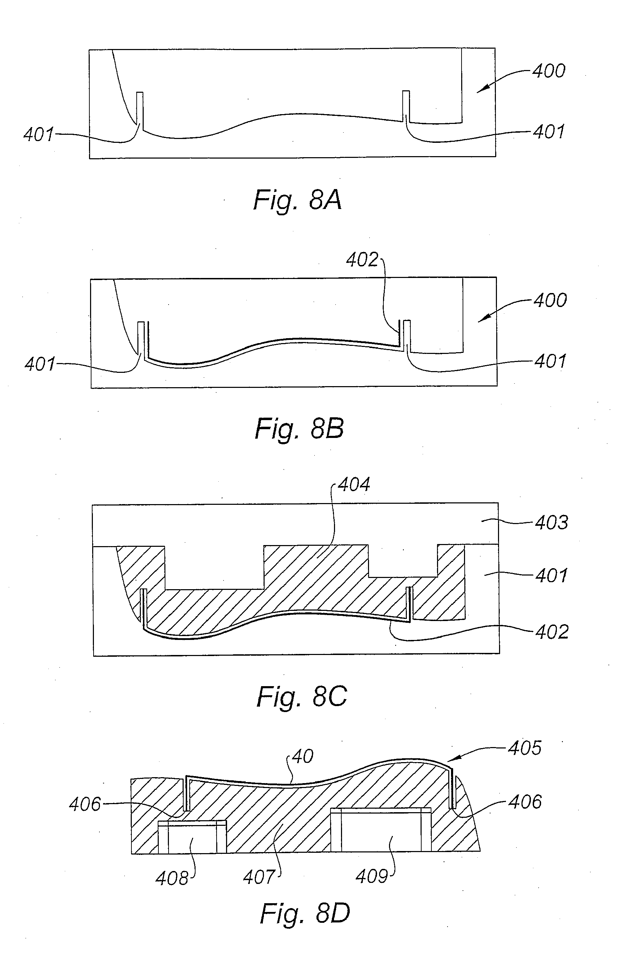

Ainsi, selon la figure 8A, on utilise un moule d'expansion dont la partie inférieure 400 comporte intérieurement une cloison mince 401 délimitant la périphérie de la surface d'assise du réhausseur, destiné à être couverte par la pièce de tissu ; cette cloison 401 a une hauteur suffisante pour bien encastrer le bord de la pièce de tissu comme cela sera vu ultérieurement sans pénétrer trop profondément dans la cavité et par suite ultérieurement dans l'épaisseur de la matière du siège réhausseur, pour conserver l'homogénéité ou la continuité de la matière qui sera expansée.

Dans une deuxième étape (figure 8B), on place la pièce de tissu 402 préalablement découpée sans précision particulière à la forme nécessaire, dans la cavité du moule située à l'intérieur de la cloison 401 délimitant la surface d'assise. Pour cela, la pièce de tissu 402 peut être ponctuellement fixée à cette cloison mince 401, comme pas exemple par aspiration.

Dans une troisième étape, on referme le moule avec sa seconde partie 403 et on introduit la matière 404 puis, on l'expanse. La matière expansée occupe toute la cavité du moule à l'intérieur de la surface d'assise et autour de celle-ci (figure 8C). Comme matière, on utilise avantageusement du polypropylène expansé (PPE) ou du polystyrène expansé (PSE) ou du polyéthylène expansé (PEE).

Puis, on démoule le siège réhausseur 405 terminé (figure 8D).

Cette vue en coupe montre pour ce réhausseur 405, la surface d'habillage ainsi que la gorge 406 dans laquelle est encastré le bord de la pièce d'habillage. Le corps 407 du réhausseur 405 comporte dans son fond, des cavités 408, 409 pour réduire la quantité de matière et l'alléger, comme cela apparaît déjà aux figures 5 et 6.

Le procédé tel que décrit ci-dessus correspond au procédé général décrit à l'aide des figures 3A-3D. Mais il est également possible d'appliquer le procédé tel que décrit aux figures 4A-4E.

Le moulage par expansion de matière plastique peut également se faire en plusieurs étapes. Par exemple, au cours d'une première étape et avec une seconde partie de moule appropriée, on expanse à la vapeur d'abord la matière soit à l'extérieur de la cavité de la surface d'assise soit à l'intérieur de celle-ci. Puis, au cours d'une seconde étape, on fait une expansion de la partie complémentaire du moule. Cela permet de donner des caractéristiques mécaniques différentes à la partie du réhausseur située sous la surface d'assise et la partie à l'extérieur de celle-ci.

Enfin, par une expansion différentielle, par exemple en deux étapes, on peut créer une couche de matière plus souple dans une certaine épaisseur de la surface d'assise puis, une matière expansée plus rigide dans la partie restante de l'assise et dans la partie périphérique.

La surface du moule peut être structurée pour donner à la surface du réhausseur à l'extérieur de la surface d'assise, un aspect non lisse, par exemple l'aspect du grain du cuir ou autre motif esthétique.

Suivant d'autres caractéristiques avantageuses, on expanse différemment la matière située sous la surface d'assise et le restant de la matière expansée du siège réhausseur. En particulier, on expanse au moins une couche de la matière sous la surface d'assise pour lui laisser plus de souplesse que dans la partie restante du siège réhausseur et notamment dans les autres parties du volume du siège réhausseur.

## Revendications

1. Produit en matière plastique expansée comportant un habillage sur une partie de sa surface, telle qu'un meuble, un élément de meuble, un siège,
**caractérisé en ce que**
la surface (12) couverte par l'habillage est bordée par une gorge (13) dans laquelle est encastré le bord (21) de la pièce de matière d'habillage (2).

2. Produit en matière plastique expansée selon la revendication 1,
**caractérisé en ce qu'**
il est en forme de siège réhausseur (300) pour enfant, ayant une surface d'assise (301) bordée par des côtés latéraux relevés (301AR), en matière plastique expansée, la surface d'assise (301) étant couverte d'une pièce d'habillage (302), complexée, dont les bords (321) sont encastrés dans l'épaisseur de la matière plastique expansée de l'assise (301).

3. Produit tel que siège réhausseur selon la revendication 2,
**caractérisé en ce que**
les bords (321) sont enfoncés dans une gorge (312) bordant la surface d'assise située à l'intérieur des limites du siège.

4. Produit tel que siège réhausseur selon la revendication 2,
**caractérisé en ce que**
la surface du siège (300) entourant la surface d'assise (301) revêtue de la pièce de tissu (302) a une structure non lisse, d'un grain de cuir ou d'un motif.

5. Produit tel que siège réhausseur selon la revendication 1,
**caractérisé en ce que**
la matière plastique expansée est du polypropylène expansé, du polystyrène expansé ou du polyéthylène expansé.

6. Produit tel que siège selon la revendication 1,
**caractérisé en ce que**
la matière plastique sous la surface d'habillage (12) est expansée à un degré d'expansion différent des autres parties du produit.

7. Produit en matière plastique expansée selon la revendication 1,
**caractérisé en ce que**
la pièce d'habillage est une pièce de tissu.

8. Procédé de fabrication d'un produit en matière plastique expansée comportant un habillage de surface tel qu'un meuble, élément de meuble, siège, pièce d'intérieur d'habitacle de véhicule selon l'une des revendications 1 à 7,
**caractérisé en ce qu'**
- on réalise un moule (200) muni d'une cloison (230) délimitant jusqu'à une certaine profondeur, la surface d'habillage (231) du produit,
- on place dans le moule, à l'intérieur de la cavité délimitée par la cloison, une pièce d'habillage (240), notamment en tissu,
- on introduit la matière plastique (250) dans la cavité du moule (200) et on la fait expanser pour intégrer la pièce d'habillage (240) dans la surface d'habillage de la pièce.

9. Procédé de fabrication d'un produit en matière plastique expansée comportant un habillage de surface tel qu'un meuble, élément de meuble, siège, pièce d'intérieur d'habitacle de véhicule selon la revendication 7,
**caractérisé en ce qu'**
- on réalise un moule (200) muni d'une cloison (230) délimitant jusqu'à une certaine profondeur, la surface d'habillage (231) du produit,
- on fait expanser la matière plastique (250) de la pièce dans le moule (200),
- on ouvre le moule (200) et on place la pièce d'habillage (240) sur la surface d'habillage puis, on referme le moule pour encastrer le bord de la pièce d'habillage dans la gorge du corps du produit moulé et plaquer/appliquer le tissu sur la matière expansée.

10. Procédé selon l'une quelconque des revendications 8 ou 9,
**caractérisé en ce que**
la pièce d'habillage (240) est revêtue sur sa face arrière d'un adhésif réactivable par la chaleur pour adhérer à la matière expansée.
